# FASCICULE DE BREVET EUROPEEN

(11) **EP 1 227 995 B1**
(45) Date de publication et mention de la délivrance du brevet: **18.08.2004**
(21) Numéro de dépôt: 00974619.9
(22) Date de dépôt: 31.10.2000
(51) Int. Cl.: B65G 47/91

(54) **DISPOSITIF DE PREHENSION ET DE DEPLACEMENT D'UN OBJET PRESENTANT UNE FACE PARTIELLEMENT PLANE**
VORRICHTUNG ZUM GREIFEN UND BEWEGEN EINES GEGENSTANDS MIT EINER TEILWEISE EBENEN SEITE
DEVICE FOR GRIPPING AND MOVING AN OBJECT HAVING A PARTIALLY PLANAR SURFACE

(30) Priorité: 08.11.1999 FR 9913971
(43) Date de publication de la demande: 07.08.2002
(73) Titulaire: Elf Lubrifiants, 92800 Puteaux (FR)
(72) Inventeur: GUERRY, Philippe, F-76140 Le Petit Quevilly (FR); MINARD, Patrice, F-76250 Deville les Rouen (FR)
(74) Mandataire: Jolly, Jean-Pierre
(86) Numéro de dépôt international: PCT/FR2000/003039
(87) Numéro de publication internationale: WO 2001/034504

(56) Documents cités:
- WO-A-93/16582
- DE-A- 3 923 672
- DE-U- 29 609 486
- FR-A- 2 724 644
- US-A- 4 749 219
- "SELF SEALING VACUUM PICK UP" RESEARCH DISCLOSURE,GB,INDUSTRIAL OPPORTUNITIES LTD. HAVANT, no. 392, 1 décembre 1996 (1996-12-01), page 770 XP000682064 ISSN: 0374-4353

## Description

La présente invention concerne un dispositif de manutention d'objets et notamment un dispositif de préhension et de déplacement d'un objet présentant une face partiellement plane, selon le préambule de la revendication 1. Un tel dispositif est connu du document DE-A-3 923 672.

Elle trouve son application dans les chaînes de fabrication d'objets et les installations de conditionnement de produits, notamment de produits liquides.

### ETAT DE LA TECHNIQUE ANTERIEURE

Un dispositif de préhension d'un objet présentant une surface plane est décrit dans le brevet français n° 2 750 910 du 12.07.1996. Ce dispositif est constitué d'un corps qui comprend deux faces dont l'une est pourvue d'au moins une ventouse formant une chambre qui est reliée de façon étanche à un conduit qui traverse ledit corps pour déboucher sur son autre face.

Pour saisir un objet présentant une face plane la ventouse est appliquée sur cette face plane et le conduit est obturé au moyen d'un doigt pour créer un vide partiel à l'intérieur de la chambre de la ventouse.

Lorsque ce dispositif comporte plusieurs ventouses celles-ci sont reliées de façon étanche au même conduit. Si une des ventouses ne s'applique pas sur une partie plane de l'objet à saisir ou ne s'applique pas de manière étanche sur une partie plane, du fait de la communication entre les chambres des deux ventouses le vide ne peut pas être réalisé. Dans ces situations, ce dispositif est inopérant. C'est le cas lorsqu'on doit manipuler des objets de formats différents.

Un autre dispositif connu de préhension d'un objet présentant une face plane est décrit dans le brevet US 5,421,685 du 6 juin 1995. Ce dispositif comporte une pluralité de ventouses formant des chambres reliées de façon étanche à une pompe à vide commune.

Pour saisir un objet, on appuie les ventouses contre la face plane de l'élément, ce qui rend étanches les chambres formées par les ventouses. L'air contenu dans ces chambres est alors aspiré par la pompe à vide.

Par l'effet de succion qui résulte de ce vide, les ventouses sont rendues solidaires des objets.

Ce dispositif présente le même inconvénient que le précédent. Si une ventouse présente un défaut d'étanchéité il est impossible de faire le vide dans l'ensemble des ventouses ce qui rend le dispositif inopérant.

Une solution connue pour résoudre ce problème consiste à monter à l'intérieur du conduit qui traverse le corps de chaque ventouse un clapet à bille qui coupe le débit d'air entre la source de vide et la ventouse lorsque celui-ci est trop élevé. Mais ce dispositif est fragile, peu fiable et particulièrement sensible aux poussières présentes dans l'air ambiant en milieu industriel.

Une autre solution consiste à monter autant de pompes à vide qu'il y a de soupapes pour les rendre indépendantes les unes des autres. Un grand nombre de pompes et de tuyauteries sont alors nécessaires, ce qui alourdit considérablement le dispositif, le rend complexe et diminue d'autant sa fiabilité en augmentant les risques de panne.

Ces deux solutions présentent aussi l'inconvénient d'être coûteuses lorsqu'elles sont utilisées pour réaliser des équipements qui comportent un très grand nombre de ventouses.

### EXPOSE DE L'INVENTION

La présente invention a justement pour objet de remédier à ces inconvénients et notamment de fournir un dispositif fiable de préhension et de déplacement de séries d'objets de dimensions différentes fonctionnant en milieu industriel.

A cette fin, l'invention propose un dispositif de préhension et de déplacement d'un objet présentant une face partiellement plane, ledit dispositif comportant au moins deux ventouses formées chacune d'un corps déformable définissant une chambre ouverte sur le milieu environnant, ledit corps étant traversé par un conduit reliant la chambre au milieu environnant, un support sur lequel sont montées solidairement les ventouses, des moyens de compression desdites ventouses pour les mettre en contact étanche avec la face partiellement plane de l'objet, des moyens de contre-poussée, des moyens d'obturation des conduits traversant les corps des ventouses, des moyens de déplacement du support, lesdits moyens coopérant pour rendre solidaire de l'objet au moins une ventouse, par effet de succion, et simultanément déplacer l'objet, caractérisé en ce que les moyens d'obturation des conduits traversant les corps des ventouses sont du type à vérin, solidaires du support des ventouses.

Selon une autre caractéristique de l'invention, les moyens de compression des ventouses sont du type à vérin.

Selon une autre caractéristique de l'invention, les moyens de contre-pression sont du type à butée mobile.

Selon une autre caractéristique de l'invention, les moyens de déplacement du support des ventouses sont du type à vérin.

### BREVE DESCRIPTION DES DESSINS

L'invention sera mieux comprise à l'aide de la description qui va suivre en référence aux dessins annexés dans lesquels:
- la figure 1 représente schématiquement un premier mode de réalisation conforme au descriptif de l'invention,
- la figure 2 représente schématiquement un deuxième mode de réalisation conforme au descriptif de l'invention,
- la figure 3A représente schématiquement une vue en coupe longitudinale d'un séparateur de rangées de bidons avant déplacement des bidons comportant un dispositif conforme à l'invention,
- la figure 3B représente schématiquement une vue en coupe longitudinale du séparateur de rangées de bidons de la figure 3A après déplacement des bidons,
- la figure 4A représente schématiquement, en vue de côté, un séparateur de rangées de bidons d'une capacité de un litre,
- la figure 4B représente schématiquement, en vue de côté, un séparateur de rangées de bidons d'une capacité de cinq litres.

### EXPOSE DETAILLE DE L'INVENTION

D'une manière générale, le dispositif de l'invention concerne la préhension et le déplacement d'objets de tailles différentes présentant une face partiellement plane, au moyen de ventouses.

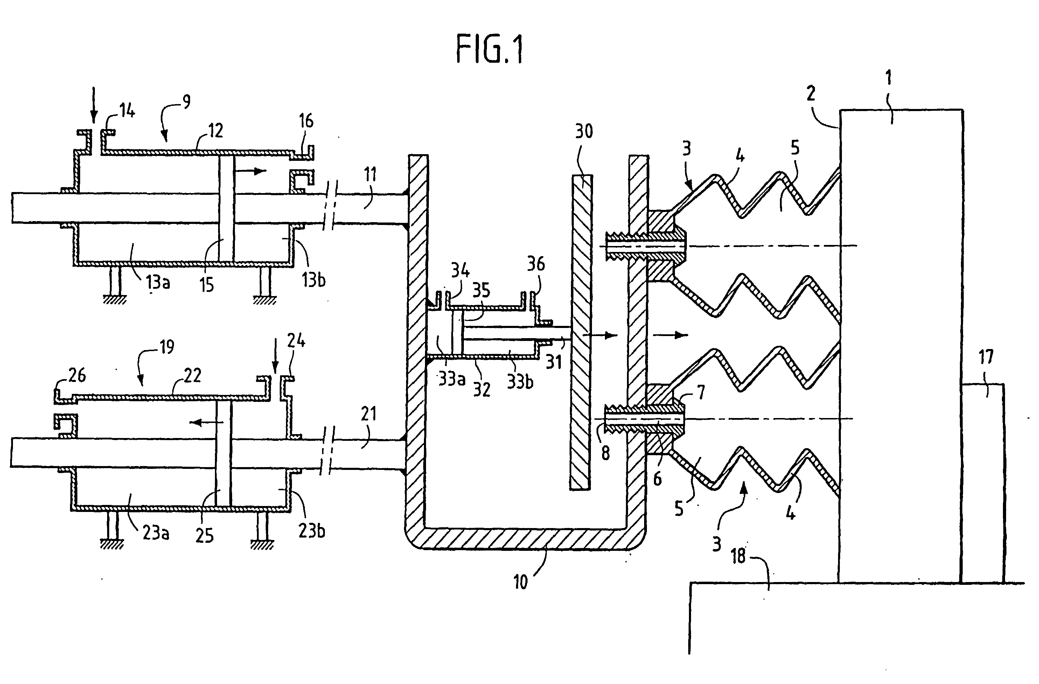

La figure 1 représente schématiquement un premier mode de réalisation de l'invention qui comporte deux ventouses 3, formées d'un corps 4 déformable, élastique du type à soufflet qui définit une chambre 5 ouverte, de volume variable.

Chaque ventouse 3 est pourvue d'un insert 7 métallique traversé par un conduit 6 qui relie la chambre 5 au milieu environnant dans lequel il débouche par une extrémité 8 filetée.

Les ventouses 3 sont vissées par l'intermédiaire des inserts 7 sur une première branche d'un support 10 en forme de U lui même solidaire d'une part, de moyens de compression et d'autre part, de moyens de déplacement des ventouses 3.

Les moyens de compression comprennent un vérin 9 à simple effet pourvu d'un piston 15 mobile dans un cylindre 12 où il définit une chambre de compression 13a et une chambre 13b.

Le piston 15 est relié à une tige 11 de sortie dont l'extrémité est solidaire de la deuxième branche du support 10.

La chambre 13a de compression du vérin 9 comporte une entrée 14 d'air comprimé reliée à une source d'air comprimé non représentée sur la figure 1 et la chambre 13b est en communication avec l'atmosphère par une ouverture 16.

Les moyens de déplacement comprennent un vérin 19 à simple effet pourvu d'un piston 25 mobile dans un cylindre 22 où il définit une chambre de compression 23a et une chambre 23b.

Le piston 25 est relié à une tige 21 de sortie dont l'extrémité est solidaire de la deuxième branche du support 10.

La chambre 23b de compression du vérin 19 comporte une entrée 24 d'air comprimé reliée à une source d'air comprimé non représentée sur la figure 1 et la chambre 23a est en communication avec l'atmosphère par l'ouverture 24.

Le dispositif de l'invention selon ce premier mode de réalisation comporte aussi des moyens d'obturation des extrémités 8 des conduits 6 constitués d'un obturateur 30 en matériau élastique fixé à une tige 31 de sortie d'un vérin 32 à double effet monté solidairement sur le support 10 entre ses deux branches. Le vérin 32 comporte deux entrées 34 et 36 de commande par lesquelles on injecte de l'air comprimé respectivement dans les chambres 33a et 33b pour agir sur le piston 35 et le faire déplacer respectivement de gauche à droite et de droite à gauche.

Le vérin 32 étant dans la position représentée sur la figure 1, l'obturateur 30 ne ferme pas les extrémités 8 des conduits 6 des inserts 7 des ventouses 3.

L'objet 1 à déplacer qui présente une face 2 plane non poreuse est posé sur un châssis 18 pourvu de moyens de contre-poussée sous la forme d'une butée 17 mobile.

La saisie de l'objet 1 consiste à injecter de l'air comprimé dans la chambre 13a par l'entrée 14, ce qui a pour effet de déplacer de la gauche vers la droite le piston 15 qui entraîne la tige 11 et ainsi de comprimer les ventouses 3 par l'intermédiaire du support 10. La face ouverte des ventouses 3 vient s'appliquer contre la face 2 plane de l'objet 1. L'objet 1 étant arrêté par la butée mobile 17, les ventouses 3 prises entre le support 10 et l'objet 1 sont soumises à un effort de compression qui les déforme, ce qui se traduit par une diminution du volume des chambres 5, une partie de l'air contenu dans ces chambres sortant par les conduits 6.

Ensuite, de l'air comprimé est injecté dans la chambre 33a du vérin 32, la chambre 33b étant mise à l'atmosphère, pour déplacer de gauche à droite le piston 35, la tige 31 et l'obturateur 30, lequel vient alors fermer les extrémités 8 des conduits 6 et ainsi rendre étanches les chambres 5 des ventouses 3.

En injectant de l'air comprimé dans la chambre 23b du vérin 22, le piston 25 se déplace de droite à gauche entraînant les ventouses 3 par l'intermédiaire du support 10 dont elles sont mécaniquement solidaires . Il résulte de ce déplacement une extension des ventouses 3 dont le volume des chambres 5 augmente. Comme ces chambres sont étanches, il se produit à l'intérieur un vide partiel qui maintient par effet de succion les ventouses 3 collées à la face 2 de l'objet 1.

Les ventouses 3 étant dimensionnées de manière à ce que la force de succion qu'elles produisent soit supérieure à la force nécessaire au déplacement de l'objet 1 sur le châssis 18, l'objet 1 est déplacé de droite à gauche en maintenant l'injection d'air comprimé dans la chambre 23b du vérin 19 jusqu'à ce que l'objet 1 ait atteint la position souhaitée.

Lorsque l'objet 1 a atteint cette position, de l'air comprimé est injecté dans la chambre 33b du vérin 32 par l'entrée 36 et simultanément la chambre 33a du même vérin est mise à l'atmosphère. Ces opérations ont pour effet de séparer l'obturateur 30 des extrémités 8 des conduits 6, ce qui permet l'entrée d'air dans les chambres 5 pour y rompre le vide. L'effet de succion cesse et les ventouses 3 sont désolidarisées de l'objet 1.

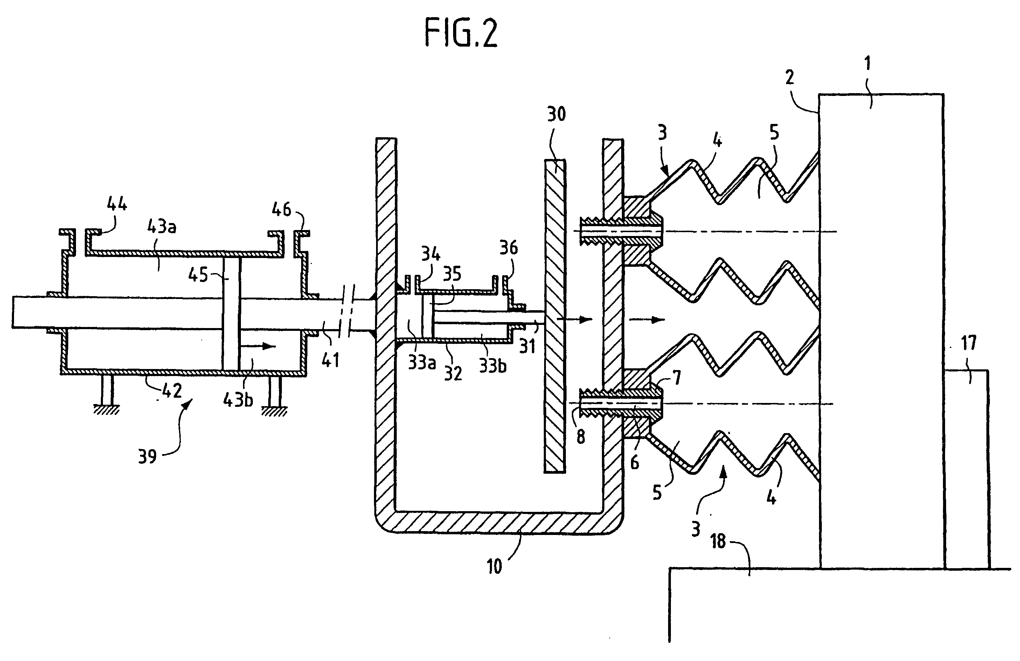

La figure 2 représente schématiquement un deuxième mode de réalisation du dispositif de l'invention qui comporte :
- des ventouses 3 montées sur un support 10 et des moyens d'obturation 30, 32 tels que décrits pour le premier mode de réalisation et fonctionnant de la même manière,
- des moyens de compression des ventouses 3 et de déplacement de l'objet 1 qui comprennent un vérin 39 à double effet qui comprend un piston 45 mobile dans un cylindre 42 où il définit deux chambres 43a, 43b et une tige 41 de sortie ayant une première extrémité solidaire du piston 45 et une deuxième extrémité reliée à une deuxième branche du support 10 des ventouses 3. Le vérin 39 comporte deux entrées 44 et 46 de commande par lesquelles on injecte de l'air comprimé à partir d'une source d'air comprimé non représentée sur la figure 2, respectivement dans les chambres 43a et 43b pour agir sur le piston 45 et le faire déplacer respectivement de gauche à droite et de droite à gauche.

Dans ce deuxième mode de réalisation le vérin 39 assure donc deux fonctions : la compression des ventouses 3 et le déplacement de l'objet 1.

Grâce au dispositif de l'invention, les ventouses fonctionnent indépendamment les unes des autres, ce qui permet la préhension et le déplacement d'objets de formats différents sans modifications ou réglages.

De plus, le dispositif de l'invention est robuste et fiable car il ne comporte pas d'éléments fragiles tels que des clapets à billes, il est aussi peu onéreux et peu sensible à la présence de poussières dans son milieu environnant.

Le dispositif de préhension et de déplacement de l'invention est particulièrement intéressant pour réaliser un séparateur de rangées de bidons qui est un élément constitutif d'un dépalettiseur , qui a pour but la saisie d'une rangée de bidons stockés sur une table d'accumulation et leur déplacement sur un convoyeur à l'entrée d'une chaîne de remplissage avec un liquide.

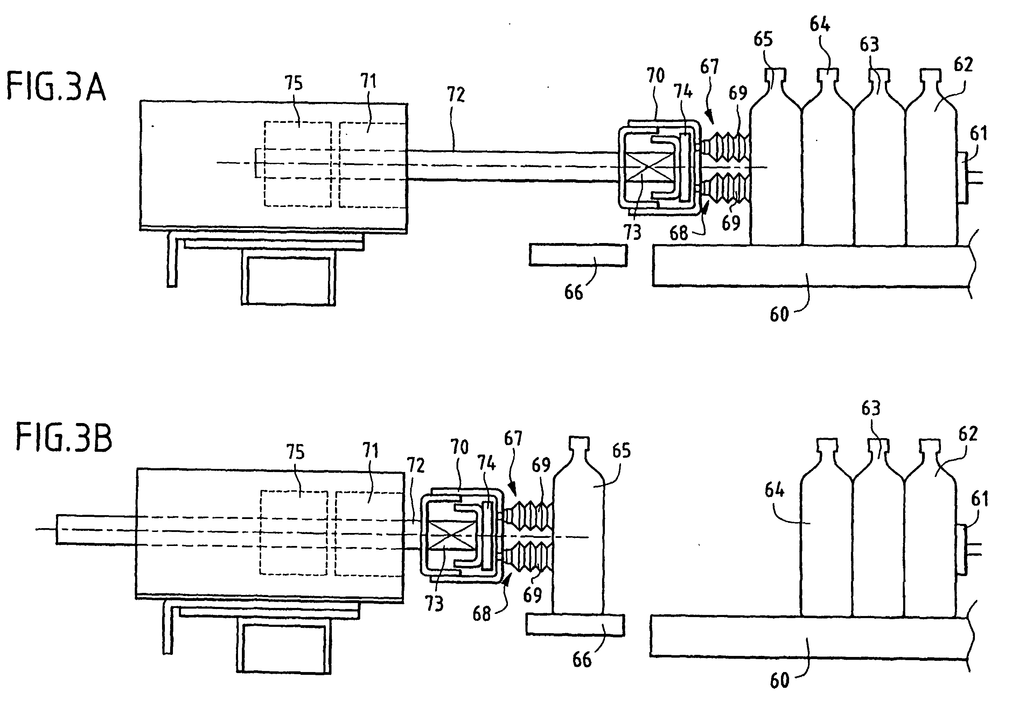

Les figures 3A et 3B représentent une vue en coupe longitudinale d'un séparateur de rangées de bidons respectivement avant et après déplacement, qui comporte :
- une table d'accumulation 60,
- une butée 61 mobile,
- quatre rangées de bidons 62, 63, 64 et 65, posées sur la table d'accumulation 60,
- un convoyeur 66 à bande
- deux rangées 67 et 68 superposées de ventouses 69, chacune comportant un corps en matériau élastique formant une chambre ouverte sur une face et traversé sur la face opposée par un conduit,
- un support 70 des ventouses 69,
- des moyens de compression des ventouses 69 qui comprennent un vérin 71 à simple effet qui agit sur une tige 72 de sortie solidaire du support 70,
- des moyens d'obturation des conduits des ventouses 69 qui comprennent un vérin 73 à double effet qui commande un obturateur 74,
- des moyens de déplacement qui comportent un vérin 75 simple effet qui agit sur la tige 72 de sortie.

La figure 4A représente, en vue de côté partielle, un séparateur de rangées de bidons 80 de capacité unitaire de un litre posés sur une table d'accumulation 60, qui comporte deux rangées de ventouses 81 disposées en quinconce l'une au dessus de l'autre et un convoyeur 83.

Une partie des ventouses 81 est en contact avec les faces 85 partiellement planes des bidons 80.

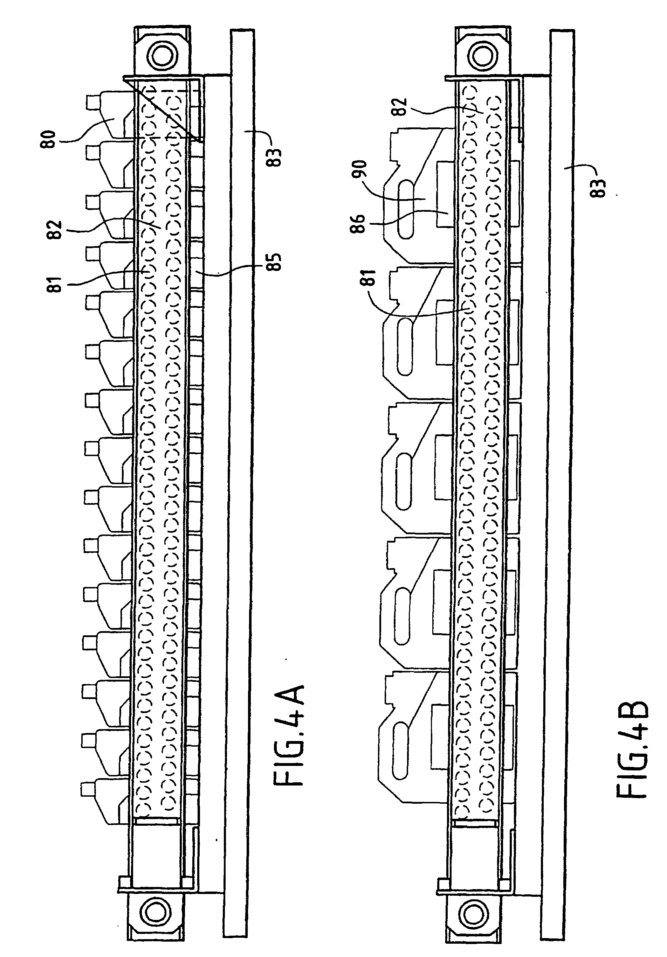

La figure 4B représente en vue de côté partielle un séparateur de rangées de bidons 90 de capacité unitaire de cinq litres posés sur une table d'accumulation 60, qui comporte deux rangées de ventouses 81 disposées en quinconce l'une au dessus de l'autre et un convoyeur 83.

Une partie des ventouses 81 est en contact avec les faces 86 partiellement planes des bidons 90.

Grâce à l'invention, il est possible de saisir des rangées de bidons de capacités ou de formats différents sans avoir à effectuer des réglages délicats et longs sur le dispositif de préhension pour l'adapter à de nouveaux formats.

## Revendications

1. Dispositif de préhension et de déplacement d'un objet (1) présentant une face (2) partiellement plane, ledit dispositif comportant au moins deux ventouses (3) formées chacune d'un corps (4) déformable définissant une chambre (5) ouverte sur le milieu environnant, ledit corps (4) étant traversé par un conduit (6) reliant la chambre (5) au milieu environnant, un support (10) sur lequel sont montées solidairement les ventouses (3), des moyens (9) de compression desdites ventouses (3) pour les mettre en contact étanche avec la face (2) partiellement plane de l'objet (1), des moyens (17) de contre-poussée, des moyens (30) d'obturation des conduits (6) traversant les corps (4) des ventouses (3), des moyens (19) de déplacement du support (10), lesdits moyens (9, 17, 30, 19) coopérant pour rendre solidaire de l'objet (1) au moins une ventouse (3), par effet de succion, et simultanément déplacer l'objet (1), **caractérisé en ce que** les moyens d'obturation (30) des conduits (6) traversant les corps (4) des ventouses (3) sont du type à vérin, solidaires du support (10) des ventouses (3).

2. Dispositif selon la revendication 1, **caractérisé en ce que** les moyens (9) de compression des ventouses (3) sont du type à vérin.

3. Dispositif selon la revendication 1 ou 2, **caractérisé en ce que** les moyens (17) de contre-poussée sont du type à butée mobile.

4. Dispositif selon une quelconque des revendications 1 à 3, **caractérisé en ce que** les moyens (19) de déplacement du support (10) des ventouses (3) sont du type à vérin.

5. Application du dispositif selon une quelconque des revendications 1 à 4, pour la réalisation d'un séparateur de rangées de bidons disposés sur une table d'accumulation.

## Patentansprüche

1. Vorrichtung zum Greifen und Bewegen eines Gegenstands (1), der eine teilweise ebene Fläche (2) aufweist,
wobei die Vorrichtung enthält:
zumindest zwei Saugnäpfe (3), von denen jeder aus einem verformbaren Körper (4) gebildet ist, der eine zur Umgebung hin offene Kammer (5) begrenzt, wobei der Körper (4) von einer Leitung (6) durchdrungen ist, die die Kammer (5) mit der Umgebung verbindet,
einen Träger (10), mit dem die Saugnäpfe (3) fest verbunden sind,
Mittel (9) zum Zusammendrücken der Saugnäpfe (3), um sie in engen Kontakt mit der teilweise ebenen Fläche (2) des Gegenstands (1) zu bringen,
Mittel (17) für den Gegendruck,
Mittel (30) zum Verschluss der Leitungen (6), die die Körper (4) der Saugnäpfe (3) durchdringen,
Mittel (19) zur Bewegung des Trägers (10),
wobei die Mittel (9, 17, 30, 19) zusammenwirken, um zumindest einen Saugnapf (3) durch Saugeffekt mit dem Gegenstand (1) zu verbinden und gleichzeitig den Gegenstand (1) zu bewegen,
**dadurch gekennzeichnet, dass**
die Mittel (30) zum Verschluss der Leitungen (6), die die Körper (4) der Saugnäpfe (3) durchdringen, von der Art eines Hubzylinders sind und mit dem Träger (10) der Saugnäpfe (3) verbunden sind.

2. Vorrichtung nach Anspruch 1, **dadurch gekennzeichnet, dass** die Mittel (9) zum Zusammendrücken der Saugnäpfe (3) von der Art eines Hubzylinders sind.

3. Vorrichtung nach Anspruch 1 oder 2, **dadurch gekennzeichnet, dass** die Mittel (17) für den Gegendruck von der Art eines beweglichen Widerlagers sind.

4. Vorrichtung nach einem der Ansprüche 1 bis 3, **dadurch gekennzeichnet, dass** die Mittel (19) zur Bewegung des Trägers (10) der Saugnäpfe (3) von der Art eines Hubzylinders sind.

5. Anwendung der Vorrichtung nach einem der Ansprüche 1 bis 4 für die Verwirklichung einer Trennvorrichtung für Reihen von Gefäßen, die auf einer Sammelplatte angeordnet sind.

## Claims

1. A device for gripping and displacing an object (1) having a partially flat face (2), said device comprising at least two suction cups (3) each formed of a deformable body (4) defining a chamber (5) opening to the surrounding environment, said body (4) having passing through it a duct (6) connecting the chamber (5) with the surrounding environment, a support (10) on which are integrally mounted the suction cups (3), means (9) of compressing said suction cups (3) to bring them into tight contact with the partially flat face of the object (1), counter-thrust means (17), means (30) of closing the ducts (6) passing through the bodies (4) of the suction cups (3), means (19) of displacing the support (10), said means (9, 17, 30, 19) cooperating to connect at least one suction cup (3) firmly to the object (1), through the action of suction, and simultaneously to displace the object (1), **characterised in that** the means (30) of closing the ducts (6) passing through the bodies (4) of the suction cups (3) are of the jack type, integral with the support (10) of the suction cups (3).

2. A device according to claim 1, **characterised in that** the means (9) of compressing the suction cups (3) are of the jack type.

3. A device according to claim 1 or claim 2, **characterised in that** the counter-thrust means (17) are of the mobile stop type.

4. A device according to any one of claims 1 to 3, **characterised in that** the means (10) of displacing the support (10) of the suction cups (3) are of the jack type.

5. Use of the device according to any one of claims 1 to 4, to provide a separator for rows of containers disposed on a storage table.
